# EUROPEAN PATENT APPLICATION

(11) **EP 2 437 551 A1**
(43) Date of publication of application: **04.04.2012**
(21) Application number: 10306076.0
(22) Date of filing: 01.10.2010
(51) Int. Cl.: H04W 48/18

(54) **Method for steering a handset's user on preferred networks while roaming**

(71) Applicant: Gemalto SA, 92190 Meudon (FR)
(72) Inventor: VERAN, Vincent, 92197, MEUDON CEDEX (FR); MAZALI, Kaoutar, 92197, MEUDON CEDEX (FR); KUC, Jean-François, 92197, MEUDON CEDEX (FR)

(57) **Abstract**

The present invention provides a method for steering a handset's user on preferred networks while roaming, said user being able to move from a home network to a visited network characterised in that on detecting a roaming event, the handset automatically switches from 2G/3G visited networks to Wi-Fi preferred networks when available.

## Description

### FIELD OF THE INVENTION

The invention relates to the field of roaming and especially deals with a method for steering a handset's user on preferred networks while roaming.

### BACKGROUND OF THE INVENTION

Due to the boom of mobile data, Mobile Network Operators (MNO) are facing a problem in roaming. End users use mobile Internet like at home. By this behaviour, traffic data is consequently tremendously growing and mobile phones such as Iphones may generate 50% of mobile traffic data. Many MNOs are facing network congestion and many users are shocked when receiving huge bills.

At home, many MNOs adopted Wi-Fi/3G to offload their 3G networks such as AT&T USA, 02 UK, China Mobile, Softbank Japan, etc... Partnerships have been developed between MNOs and WLAN providers. In roaming, some operators also recommend to use Wi-Fi instead of 3G. They usually inform their users through their web site or via direct mailing information. But there isn't any communication directly targeted to roamers when they arrive abroad.

Currently while being abroad, a user may connect to Wi-Fi hotspots using his home subscription.

Different commercial offers exist. For a same MNO, the cost, the wireless access can be for example different according to the user's subscription or choice.

In PCs and handsets, there are also some applications that display a list of available Wi-Fi networks. The "Orange Wi-Fi Access Landing" page allows a user to connect the home operator or the Roaming partner by entering a username and password for a successful connection. A similar connection is proposed by a mobility software called "iPassConnect" which allows mobile devices to connect to the Internet over Wi-Fi hotspots, Ethernet, Dialup, and mobile broadband network services etc... Wi-Fi services available in hotels and airports across the world allow travelling individuals to access the Internet without paying per-location fees. The software validates the authentication of a hotspot and then encrypts a user's authentication data.

However these solutions may be complicated an unintuitive, either the user is required to download specific software applications, etc..., or the user must be aware of Wi-Fi roaming partners and their locations abroad. Users should as well remember their credentials to gain access to partners' hotspots.

There is then a need for MNO to find secure, cheaper, and simplified solutions to switch roamers from 3G networks to partners' Wi-Fi networks when available.

### SUMMARY OF THE INVENTION

The purpose of the invention is to provide a method for an automatic configuration of Wi-Fi settings while roaming, i.e. a method for remote provisioning of 2G/3G mobile roamers with Wi-Fi settings, credentials and preference list for automatic authentication to Wi-Fi when available.

For this purpose, an object of the invention is a method for steering a handset's user on preferred networks while roaming, said user being able to move from a home network to a visited network characterised in that on detecting a roaming event, the handset automatically switches from 2G/3G visited networks to Wi-Fi preferred networks when available.

According to other aspects of the invention,
- the method may comprise sending a new configuration profile to the handset, said configuration profile comprising Wi-Fi hotspot settings available in said visited country;
- the method may comprise updating or downloading via an Over-The-Air channel files comprising preferred Service Set Identifier (SSID) and Public Land Mobile Networks (PLMN) for the user's home operator;
- the method may comprise sending a text message to the user, said message comprising Wi-Fi roaming credentials;
- the method may comprise downloading an application on the handset comprising Wi-Fi connection settings;
- the method may comprise downloading an EAP-SIM client compatible with the user's handset;
- the method may comprise sending an URL via an SMS message so as to launch automatically the connection to roaming Wi-Fi partners authenticating to Wi-Fi hotspots via a landing page;
- the method may comprise starting an interactive session for subscribing to a Wi-Fi roaming service.

Thanks to the invention an automatic update of hotspots profiles and preference list is occurring when roamers are attached to 3G network for automatic authentication to Wi-Fi hotspot when they are available.

Thanks to the invention, the benefits of operators may increase in the Wi-Fi Roaming field improving the end user experience.

Thanks to the invention, the method can also be used for domestic usage. For a national user, it reduces network congestion by switching subscribers to Wi-Fi when 3G network is overloaded.

The invention is now described, by way of example, with reference to the accompanying drawings. The specific nature of the following description should not be construed as limiting in any way the broad nature of this summary.

### BRIEF DESCRIPTION OF THE DRAWINGS

In order that the manner in which the above recited and other advantages and features of the invention are obtained, a more particular description of the invention briefly described above will be rendered by reference.

Notwithstanding any other forms that may fall within the scope of the present invention, preferred forms of the invention will now be described, by way of example only, with reference to the accompanying drawing in which:

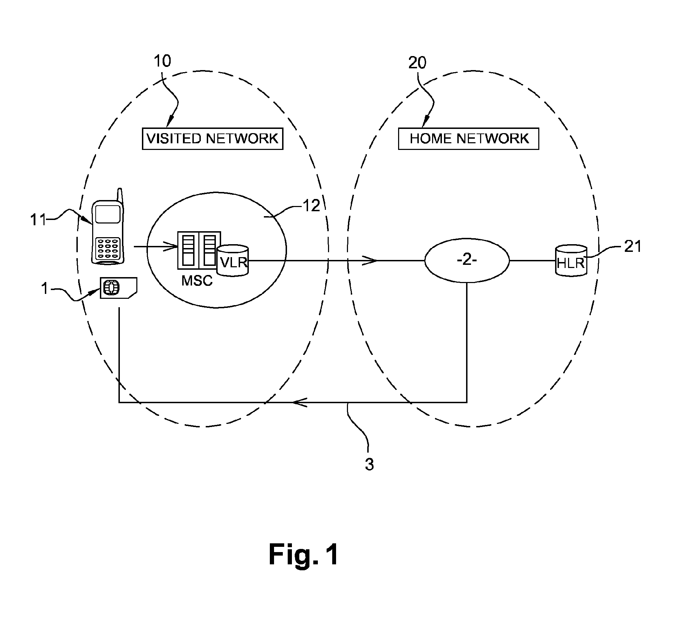

**FIG.1** schematically shows a schematic diagram of a telecommunication system.

### DETAILED DESCRIPTION OF THE PREFERRED EMBODIMENTS

The present invention may be understood according to the detailed description provided herein.

According to the invention, the method of Wi-Fi steering comprises sending a list of Wi-Fi hotspots settings and their credentials partnering with the MNO when a subscriber arrives abroad. The method comprises a roaming detection step. Different steps then occurs after a roaming event is detected depending on the subscriber device type, the visited countries, the Wi-Fi roaming agreements and other rules as explained below.

Shown in Fig.1 is telecommunication system comprising a SIM card 1 inserted in a mobile handset such as a mobile phone 2 which usually contains three standardized files to drive a network selection: the **EF_{PLMNsel}** file, the **EF_{LOCI}** file and the **EF_{FPLMN}** file.

The **EF_{PLMNsel}** file - or EF_{PLMNwACT} file for 3G networks- comprises a list of preferred roaming partners. While abroad, a handset such as a mobile phone tries in priority to attach to networks defined in the PLMN file. The **EF_{LOCI}** file comprises current registered network. While abroad, the mobile phone tries to attach to the last visited network. The **EF_{FPLMN}** file comprises forbidden networks. While abroad, the mobile phone will never connect to networks defined in the FPLMN file. The immediate attachment to the MNO is defined in the SIM Card.

The telecommunication system comprises a combined SIM, OTA (Over-The-Air) & SS7 Wi-Fi Roaming system 2 which provides optimized, real-time and effective traffic steering. The Wi-Fi Roaming system 2 is a network-based integrated with the mobile operator's network as an active Proxy HLR in front of the Home Location Register (HLR) 21 or is connected to network probes to receive location updates (international signalling link)

The Wi-Fi Roaming system 2 is controlled by an application and a user-friendly provisioning tool allowing Operators to configure the behavior of the solution to its marketing and technical strategies. The Roaming Director application allows Operators to configure the criteria according to which the application will create and download PLMN lists to handsets. This capability provides a flexible way to customize the Wi-Fi roaming system 2 profile according to the visited country/Country-Group, visited network, subscriber profile and other criteria.

A GUI interface also provides the operator with a quick snapshot of the status of the preferred networks in all countries. The operator can selectively filter and search for the desired information, and take measures whenever the reported results show need for correction.

When a subscriber arrives abroad, the mobile 11 initiates a location update procedure by sending a "Location Updating" message to a Mobile Switching Center / Visitor Location Register (MSC/VLR) 12 in the visited network 10. The "Location Updating" message comprises a Location Area Identity (LAI) and an International Mobile Subscriber Identity (IMSI) which consists of a Mobile Country Code (MCC), a Mobile Network Code (MNC), and a Mobile Subscriber Identification Number (MSIN). The MSC/VLR 12 receives the message and determines whether the mobile is allowed to roam on the visited network by comparing the MCC and the MNC in the message with current roaming agreements with the mobile's home network operator.

If the mobile 11 is allowed to roam on its network, the MSC/VLR 12 sends an "UpdateLocation" message to the Wi-Fi Roaming system 2, prior to relaying it to the Home Location Register (HLR) 21 in the mobile's home network 20, which is the subscriber's operator.

The Wi-Fi Roaming system 2 intercepts or monitors all UL request messages sent to the operator's network from subscriber handsets whenever an outbound roamer turns on the handset or moves from one VLR to another. Once a Location Update event is detected, **i.e.** when the Wi-Fi Roaming system 2 relays the Location Update request to the HLR, it immediately identifies available 2G/3G and Wi-Fi networks and updates the SIM Card accordingly to direct them to the preferred networks in real time. When Wi-Fi hotspots are available, the Wi-Fi Roaming system 2 sends Wi-Fi settings to allow access to Wi-Fi preferred networks and the handset 2 automatically switches from 2G/3G networks to Wi-Fi.

Once the roaming event is detected, the method provides different steps depending on the used handset, the visited networks, the subscription of the user, etc... in order to steer the roamer successfully towards available and preferred Wi-Fi hotspots.

According to an embodiment, when the subscriber has an iPhone as handset 11, the Wi-Fi Roaming system 2 sends a SMS text comprising an internet address URL. When the subscriber clicks on the URL, the iPhone accesses via 3G internet to the Wi-Fi Roaming system 2 which uploads the new configuration profile into the iPhone 11. This configuration profile contains the list of Wi-Fi hotspots settings available in the visited country such as for example the name of the Service Set Identifier (SSID), authentication method (WEP, WPA/WPA2) and security keys. When the iPhone receives this configuration profile, it configures automatically Wi-Fi settings in the handset. Then, the user seamlessly switches to Wi-Fi once his handset detects a preconfigured hotspot.

According to another embodiment, the subscriber has an Extensible Authentication Protocol (EAP) SIM compliant device as handset able to manage elementary files such as EFowlanplmn file or EFowsidl file. The EFowsidl is the Operator controlled WLAN Specific Identifier List which contains preferred SSIDs for the operator. The EFoplmnwlan is the Operator controlled PLMN selector for WLAN access which contains preferred PLMNs for the operator. The Wi-Fi Roaming system 2 updates or downloads such files by an OTA channel 3.

According to another embodiment, the Wi-Fi Roaming system 2 sends a text message to the end user with his Wi-Fi roaming credentials, such as SSID, WEP/ WAP, passcode, key, hotspots lists, etc... of the preferred Wi-Fi network. The Wi-Fi roaming partners exchange their credentials and users data base so that visited Wi-Fi hotspot can authenticate Wi-Fi roamers when they try to get access. The home operator can then remember users their credentials via SMS.

According to another embodiment, the method comprises downloading an application on the handset containing Wi-Fi connection settings. This application is able to manage wireless connections. It lists available Wi-Fi hotspots and Wi-Fi roaming partners with preconfigured settings. The user has just to select the hotspot and to connect for example by a simple "click" to get connection.

According to another embodiment, the method comprises downloading a EAP-SIM client compatible with the handset of the user when the handset 2 is not an EAP-SIM compliant device. For open Operating Systems like Windows Mobile, Symbian, Android, or Linux, EAP-SIM support is granted thanks to a supplicant. Once downloaded, the handset 2 can immediately support EAP-SIM authentication to Wi-Fi hotspots.

According to another embodiment, the Wi-Fi roaming system 2 sends an URL via SMS to launch automatically the connection to the roaming Wi-Fi partner with a login and a password already filled in. The user is advantageously remembered his personal username/password by just sending SMS with URL as the connection procedure may be complicated and unsecured especially when the user roams and should be aware of Wi-Fi roaming partners and their locations. The user just has to connect by a simple click or has to accept use conditions to get connected even if he loses or forgets these parameters. Authentication to Wi-Fi hotspots is for example done via a landing page. Once the user is attached to a hotspot, he launches the browser. The landing page automatically displays and the user types his personal username/password to get connection.

If the user is not a Wi-Fi roaming customer, the method comprises starting an interactive session via SIM based menus such as Dynamic SIM Tool Kit (DSTK) wherein the user chooses whether he wants to subscribe to the corresponding service or not. When the user wants to subscribe to this service, the method comprises triggering an interactive session to propose Wi-Fi roaming service to the user, to inform him about the availability of Wi-Fi hotspots in the visited country and the possibility to get Wi-Fi access. The user chooses the convenient package for example one day for x€, then, any of the above embodiments can be used in order to configure the handset to use visited Wi-Fi hotspots.

According to another embodiment, for detecting that a user arrives abroad, instead of monitoring the update location requests and the update location response of the SS7 network of the home network, the home network detects that the subscriber arrives abroad via an applet installed into the SIM card 1 or an application installed into the handset 2. The applet detects that the subscriber is abroad by comparing the MNC/MCC of the IMSI to the MNC/MCC of the visited country in the LOCI file and sends the current location MNC/MCC to the Wi-Fi Roaming system 2 via a SMS or a USSD string.

Thanks to this method, the user is informed about the available hotspots, and the configuration of profiles is automatically done. The user is seamlessly switched from 3G to Wi-Fi network.

The operator is sure that his subscriber is using roaming partners Wi-Fi not on spot Wi-Fi, and can advise outbound roamers to use Wi-Fi instead of 3G.

## Claims

1. Method for steering a handset's user on preferred networks while roaming, said user being able to move from a home network to a visited network **characterised in that** on detecting a roaming event, the handset automatically switches from 2G/3G visited networks to Wi-Fi preferred networks when available.

2. Method according to claim 1, **characterised in that** it comprises sending a new configuration profile to the handset, said configuration profile comprising Wi-Fi settings available in said visited country.

3. Method according to claim 1, **characterised in that** it comprises updating or downloading via an Over-The-Air channel files comprising preferred Service Set Identifier (SSID) and Public Land Mobile Networks (PLMN) for the user's home operator.

4. Method according to claim 1, **characterised in that** it comprises sending a text message to the user, said message comprising Wi-Fi roaming credentials.

5. Method according to claim 1, **characterised in that** it comprises downloading an application on the handset comprising Wi-Fi connection settings.

6. Method according to claim 1, **characterised in that** it comprises downloading an EAP-SIM client compatible with the user's handset.

7. Method according to claim 1, **characterised in that** it comprises sending an URL via an SMS message so as to launch automatically the connection to roaming Wi-Fi partners authenticating to Wi-Fi hotspots via a landing page,

8. Method according to claim 1, **characterised in that** it comprises starting an interactive session for subscribing to a Wi-Fi roaming service.
